# EUROPEAN PATENT SPECIFICATION

(11) **EP 1 792 940 B1**
(45) Date of publication and mention of the grant of the patent: **22.10.2008**
(21) Application number: 05766986.3
(22) Date of filing: 27.07.2005
(51) Int. Cl.: C08L 33/00, C08K 5/17, C08K 5/521, C08L 75/04

(54) **ACRYLIC SOL COMPOSITION**
ACRYLSOLZUSAMMENSETZUNG
composition pour sols acryliques

(30) Priority: 07.09.2004 JP 2004259267
(43) Date of publication of application: 06.06.2007
(73) Proprietor: Adeka Corporation, Tokyo 116-8554 (JP)
(72) Inventor: BABA, Kazutaka c/o ASAHI DENKA Co., Ltd. 20,, Saitama; 3 460101 (JP); FUJITA, Yusuke c/o ASAHI DENKA Co., Ltd. 20,, Saitama; 3 460101 (JP)
(74) Representative: Forstmeyer, Dietmar
(86) International application number: PCT/JP2005/013690
(87) International publication number: WO 2006/027906

(56) References cited:
- EP-A1- 1 158 035
- EP-A1- 1 666 531
- JP-A- 2002 128 936
- JP-A- 2004 083 665
- JP-A- 2004 217 822
- JP-A- 2005 082 740
- JP-A- 2005 154 657

## Description

### Technical Field

The present invention relates to an acrylic sol composition, and specifically relates to an acrylic sol composition that does not generate hydrogen chloride gas or dioxin when combusted, has excellent storage stability, can be cured at relatively low temperatures, and provides coating films excellent in adhesion to substrates, cold resistance, and strength.

### Background Art

Plastisol, which is widely used in industry at present time, is a liquid or pasty viscous composition in which polymer particles having specially adjusted particle size and particle size distribution are homogeneously dispersed together with a filler in a plasticizer. Such plastisol forms strong coating films when applied to a substrate and treated at an appropriate temperature.

As the above polymer particles, typically, there are often used vinyl chloride resin (hereinafter "PVC") such as vinyl chloride homopolymer and vinyl chloride/vinyl acetate copolymer. Such PVC plastisols have excellent long-term storage stability at room temperature, and the coating film thereof has excellent flexibility and long durability; therefore, it is widely used in fields such as coating steel, clothing, building materials, commodities, sundries, and automobile parts.

However, PVC plastisols are decomposed by heat or light accompanied with generation of hydrogen chloride gas, which causes problems such as forming substances that destruct ozone layer, causing acid rain, and enhancing damage of incinerator during incineration. Furthermore, dioxin may also be generated under some conditions of incineration. Thus, PVC plastisols have unfavorable aspects from viewpoints of safety, hygiene, and environmental contamination. Therefore, a plastisol substituting PVC plastisol has been awaited.

As a plastisol substituting PVC plastisol, Patent Document 1 discloses a plastisol comprising a polyacrylate and an organic plasticizer. That plastisol, however, has shortcomings of insufficient storage stability and poor film-forming properties.

Patent Document 2 discloses PVC-free plastisol comprising a methyl methacrylate homo- or copolymer , a plasticizer, a filler, a blocked polyurethane, and a polyamine. In this plastisol, however, the curing reaction of urethane resin does not proceed at relatively low curing temperatures, and hence the coating film obtained has unsatisfactory performances. Furthermore, the plastisol is gelled in one or two days when left at about 35°C, and therefore it is impractical.

Patent Document 3 proposes an acrylic sol containing acrylic polymer fine particles, a blocked urethane resin, a solid hydrazine curing agent, a plasticizer, and a filler. Patent Document 4 proposes an acrylic sol for soundproof undercoating containing acrylic polymer fine particles, a plasticizer, a filler, a blocked urethane resin, a curing agent, and a foaming agent. However, these acrylic sols also have shortcomings such as insufficient adhesion to substrates and, particularly, insufficient flexibility at low temperatures.

Patent Document 5 proposes a thermosetting composition wherein a plastisol comprising core-shell acrylic resin particles and a filler dispersed in a plasticizer is blended with a blocked urethane or blocked isocyanate together with a latent curing agent. Patent Document 6 proposes another thermosetting composition wherein a plastisol comprising acrylic resin particles and a filler dispersed in a plasticizer is blended with a blocked urethane or blocked isocyanate together with a latent curing agent that is solid particulate state at ambient temperature, has a melting point of 60°C or higher, and is insoluble in the plasticizer at 40°C or lower. However, these thermosetting compositions are also unsatisfactory in viscosity stability, adhesion, or the like.

Patent Document 7 proposes an acrylic sol composition containing acrylic polymer fine particles, a blocked polyurethane, a polyamine, a phenolic resin, a plasticizer, and a filler, while Patent Document 8 proposes an acrylic sol composition containing acrylic polymer fine particles, a blocked polyurethane obtained from a polyol and a diisocyanate, a plasticizer and a filler. However, these acrylic sol compositions are also still unsatisfactory in viscosity stability or the like.

Patent Document 1: Japanese Patent No. S55-16177
Patent Document 2: Japanese Patent No. S63-66861
Patent Document 3: Japanese Patent Laid-Open Publication No. 2001-329135
Patent Document 4: Japanese Patent Laid-Open Publication No. 2001-329208
Patent Document 5: WO No. 01/88009A1 Pamphlet
Patent Document 6: WO No. 01/88011A1 Pamphlet
Patent Document 7: Japanese Patent Laid-Open Publication No. 2004-51948
Patent Document 8: WO No. 03/102077 Pamphlet

### Disclosure of the Invention

### Problems to be Solved by the Invention

The present invention was invented under such circumstances as described above. An object of the present invention is to provide an acrylic sol composition that does not generate hydrogen chloride gas or dioxin when combusted, has excellent storage stability, can be cured at relatively low temperatures, and provides coating films excellent in adhesion to substrates, cold resistance, and strength.

### Means to Solve the Problems

As the result of intensive study, the inventors of the present invention found that there is provided an acrylic sol composition with which the above problems can be improved by blending a polyamine and an acidic phosphate ester with an acrylic sol composition containing acrylic polymer fine particles, blocked polyurethane, and others, and thus they reached the present invention.

Namely, the present invention provides an acrylic sol composition comprising acrylic polymer fine particles (a), blocked polyurethane (b), polyamine (c), acidic phosphate ester (d), a plasticizer (e), and a filler (f).

### Best Mode for Carrying Out the Invention

Hereinafter, the acrylic sol composition of the present invention is described in detail.

First, detailed explanation on the acrylic polymer fine particles (a) is given below.
As the acrylic polymer fine particles serving as component (a) used in the present invention, there may be used polymers generally used for acrylic sol composition including, for example, a homopolymer or copolymer of monomers selected from alkyl acrylates and alkyl methacrylates. Specific examples of monomers are, methyl acrylate, ethyl acrylate, n-propyl acrylate, isopropyl acrylate, n-butyl acrylate, isobutyl acrylate, sec-butyl acrylate, tert-butyl acrylate, cyclohexyl acrylate, benzyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, cyclohexyl methacrylate, benzyl methacrylate, and others. Styrene, α-methylstyrene, or the like may be also used as a component to be copolymerized.

As the acrylic polymer fine particles (a), it is preferred to use core-shell acrylic polymer fine particles composed of a core and a shell. Preparation of an acryl sol composition using the core-shell acrylic polymer fine particles provides advantages of further improving storage stability and higher suppressing effects on viscosity increase in coating process and on bleeding after heat curing.

Such core-shell structure material, when used as acrylic polymer fine particles (a), preferably has the core composed of a polymer with affinity for plasticizers and the shell composed of a polymer with no affinity for plasticizers. Since the polymer in the shell, which has poor compatibility with plasticizers, covers the core compatible with plasticizers, the acrylic sol composition has further improved storage stability due to reduced increase in viscosity during storage. Furthermore, since such polymer in the shell turns compatible with plasticizers on heating to an appropriate temperature, no bleeding is brought about after heat curing.

The core preferably contains 50 % by mass or more of at least one kind of polymer selected from homopolymers and copolymers wherein the monomer(s) constituting the polymer is(are) (a) methacrylate monomer(s) selected from butyl methacrylate (n-butyl methacrylate), isobutyl methacrylate, and ethyl methacrylate. By thus providing the core with high compatibility with plasticizer, the bleeding after heat curing can be suppressed. Particularly in terms of providing flexibility to the coating film, the core preferably contains butyl methacrylate/isobutyl methacrylate copolymer as a major component.

The shell preferably contains 50 % by mass or more of at least one kind of polymer selected from a homopolymer of a methacrylate monomer selected from methyl methacrylate and benzyl methacrylate, a copolymer of the methacrylate monomers, and a copolymer of the methacrylate monomer with a copolymerizable component such as styrene. By thus providing the shell with low compatibility with plasticizer, it is possible to suppress increase in viscosity of the acrylic sol composition during storage and hence to further improve the storage stability. Particularly in terms of improving storage stability, the shell preferably contains a methyl methacrylate polymer as a major component.

Examples of the core-shell acrylic polymer fine particles usable in the present invention include core-shell acrylic resin fine particles described in Japanese Patent Laid-Open Publication No. H6-172734, Japanese Patent Laid-Open Publication No. 2001-329135, Japanese Patent Laid-Open Publication No. 2001-329208, the pamphlet of WO No. 01/88009, and the like.

The ratio of the core-forming polymer to the shell-forming polymer (former/latter) is preferably selected from the range of 25/75 to 70/30 by mass. In case where the ratio of the core is lower than the above range, the possibility of bleeding after heat curing is higher than in case where the ratio is within the above range. In case where the ratio of the shell is lower than the above range, coverage of the core with the shell may be less sufficient than in case where the ratio is within the above range, thus possibly affecting storage stability.

Considering the strength of coating film, storage stability, and others, the acrylic polymer fine particles (a) preferably has a molecular weight in the range of 100,000 to several millions in terms of mass-average molecular weight. The average particle size of the acrylic polymer fine particles is preferably in the range of 0.1 to 10 µm, in terms of diffusibility into a plasticizer and storage stability.

Next, detailed explanation on the blocked polyurethane (b) is given in the following.
The blocked polyurethane serving as component (b) used in the present invention can be obtained by blocking a polyurethane prepared by reaction of a polyisocyanate and an α-polyol such as polyetherpolyol and polyesterpolyol, using a blocking agent.

The polyisocyanate includes diisocyanates such as propane-1,2-diisocyanate, 2,3-dimethylbutane-2,3-diisocyanate, 2-methylpentane-2,4-diisocyanate, octane-3,6-diisocyanate, 3,3-dinitropentane-1,5-diisocyanate, octane-1,6-diisocyanate, 1,6-hexamethylene diisocyanate (HDI), trimethylhexamethylene diisocyanate, lysine diisocyanate, tolylene diisocyanate (TDI), xylylene diisocyanate, m-tetramethylxylylene diisocyanate, isophorone diisocyanate (3-isocyanatomethyl-3,5,5- trimethylcyclohexyl isocyanate), 1,3-bis(isocyanatomethyl)cyclohexane, 1,4-bis(isocyanatomethyl)cyclohexane, diphenylmethane-4,4'-diisocyanate (MDI), dicyclohexylmethane-4,4'-diisocyanate (hydrogenated MDI), and hydrogenated tolylene diisocyanate; and a mixture thereof. Such polyisocyanate may be an isocyanurate form generated through trimerization.

The isocyanurate form of polyisocyanate can be obtained by a known method of polymerization using a publicly-known catalyst such as a tertiary amine, a quaternary ammonium compound, a Mannich base, an alkaline metal salt of fatty acid, and an alcoholate, in an inert solvent or plasticizer, wherein the solvent includes methyl acetate, ethyl acetate, butyl acetate, methyl ethyl ketone, dioxane, and others, while the plasticizer includes phthalate esters such as diethyl phthalate, dibutyl phthalate, di-2-ethylhexyl phthalate, a mixed alkyl ester of phthalic acid wherein each alkyl group has 7 to 11 carbon atoms (hereinafter written as C₇-C₁₁), butyl benzyl phthalate, and hexyl benzyl phthalate; and phosphate esters such as triscresyl phosphate and trisphenyl phosphate; adipate esters such as di-2-ethylhexyl adipate; and trimellitate esters such as mixed (C₇-C₁₁ alkyl) trimellitate; and others. When the polymerization is performed in a highly volatile solvent, it is preferred to replace the solvent with a suitable high-boiling solvent, for example plasticizer, in the final stage.

The polyetherpolyol to be used for producing the blocked polyurethane (b) preferably includes polyalkylene glycol (molecular weight of about 100 to about 5,500) adducts of polyols.

The polyol includes aliphatic diols such as ethylene glycol, propylene glycol, 1,4-butylene glycol, and neopentane glycol; triols such as glycerol, trihydroxyisobutane, 1,2,3-butanetriol, 1,2,3-pentanetriol, 2-methyl-1,2,3-propanetriol, 2-methyl-2,3,4-butanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, pentamethylglycerol, pentaglycerol, 1,2,4-butanetriol, 1,2,4-pentanetriol, and trimethylolpropane; tetraols such as erythritol, pentaerythritol, 1,2,3,4-pentanetetraol, 2,3,4,5-hexanetetraol, 1,2,3,5-pentanetetraol, and 1,3,4,5-hexanetetraol; pentaols such as adonitol, arabitol, and xylitol; hexaols such as sorbitol, mannitol, and iditol; and others. Among these, alcohols having two to four hydroxyl groups are preferred. Propylene glycol and glycerol are particularly preferred.

The polyetherpolyol can be produced by adding a C₂-C₄ alkylene oxide to the polyol so as to yield a polymer with a desired molecular weight. The C₂-C₄ alkylene oxide includes, for example, ethylene oxide, propylene oxide, butylene oxide, of which propylene oxide is particularly preferred.

The polyesterpolyol usable for producing the blocked polyurethane (b) includes, for example, a publicly known polyester produced from a polycarboxylic acid and a polyol, a polyester obtained from a lactam, and others.

As the polycarboxylic acid, there may be used, for example, benzenetricarboxylic acid, adipic acid, succinic acid, suberic acid, sebacic acid, oxalic acid, methyladipic acid, glutaric acid, pimeric acid, azelaic acid, phthalic acid, terephthalic acid, isophthalic acid, thiodipropionic acid, maleic acid, fumaric acid, citraconic acid, itaconic acid, or any other suitable carboxylic acid of the similar kind.

As the polyol, there may be used, for example, ethylene glycol, propylene glycol, 1,4-butanediol, 1,3-butanediol, 1,5-pentanediol, 1,6-hexanediol, bis(hydroxylmethylchlorohexane), diethylene glycol, 2,2-dimethylpropylene glycol, 1,3,6-hexanetriol, trimethylolpropane, pentaerythritol, sorbitol, glycerol, or any other suitable polyols of the similar kind. There may be also used polytetramethylene glycol, polycaprolactone glycol, or the like as a polyhydroxy compound.

The polyurethane composing the blocked polyurethane (b) can be obtained by reaction of the above polyisocyanate with a polyhydroxy compound such as a polyetherpolyol like above, a polyesterpolyol like above, a mixture of these α-polyols, or a mixture containing an OH group-containing glyceride, such as castor oil, together with such polyol(s).
In the reaction for obtaining the polyurethane, the molar ratio of polyisocyanate to polyhydroxy compound such as α-polyol (former/latter) is normally 1.5/1 to 3.5 / 1, and preferably 2.0/1 to 3.0 / l. The NCO% value of pre-polymer (polyurethane) is normally 1 to 20%, and preferably 2 to 15%.

The polyurethane can be obtained by the conventional method. The reaction temperature is normally 40 to 140°C, and preferably 60 to 130°C. For promoting the reaction in formation of urethane pre-polymer, there may be used a known catalyst for urethane polymerization, for example, an organometallic compound such as dibutyltin dilaurate, tin(II) octoate, stannous octoate, lead octylate, lead naphthenate, and zinc octylate; or a tertiary amine such as triethylenediamine and triethylamine.

The polyurethane is preferably obtained from a polyetherpolyol and a diisocyanate. Here, it is particularly preferred to use a polyetherpolyol having three or more functional groups, especially glycerol tris(polypropylene glycol), as the polyetherpolyol since such polyurethane provides an acrylic sol composition more excellent in adhesion to substrates. The diisocyanate is preferably hexamethylene diisocyanate or tolylene diisocyanate in terms of adhesion to substrates.

The blocked polyurethane (b) is obtained by blocking the above polyurethane using a blocking agent. The blocking agent includes, for example, active methylene compounds such as malonic diester (diethyl malonate, etc.), acetylacetone, and acetoacetate (ethyl acetoacetate, etc.); oximes such as acetoxime, methyl ethyl ketoxime (MEK oxime), methyl isobutyl ketoxime (MIBK oxime), and methyl ketoxime; monools such as methanol, ethanol, propanol, butanol, heptanol, hexanol, octanol, 2-ethylhexanol, isononyl alcohol, stearyl alcohol, and isomers thereof; glycol derivatives such as methyl glycol, ethyl glycol, ethyl diglycol, ethyl triglycol, butyl glycol, and butyl diglycol; amines such as dicyclohexylamine; phenols such as phenol, cresol, ethylphenol, n-propylphenol, isopropylphenol, butylphenol, tert-butylphenol, octylphenol, nonylphenol, dodecylphenol, cyclohexylphenol, chlorophenol, bromophenol, resorcinol, catechol, hydroquinone, bisphenol A, bisphenol S, bisphenol F, and naphthol; ε-caprolactone; and others.

The blocking reaction to obtain the blocked polyurethane (b) may be conducted by a publicly known reaction process. The amount of blocking agent to be used is normally 1 to 2 equivalents, and preferably 1.05 to 1.5 equivalents per free isocyanate group.

Although the blocking reaction of polyurethane is normally conducted by adding the blocking agent to the polyurethane in the final stage of polymerization, the blocked polyurethane (b) can also be obtained by adding the blocking agent in any stage of polymerization.

The blocking agent may be added at the end of polymerization, that is, at the time when the predetermined degree of polymerization is attained, added at the beginning of polymerization, or partly added at the beginning of polymerization, the remaining being added at the end of polymerization. Addition at the end of polymerization is preferred. In this case, the timing of stopping polymerization may be determined based on the isocyanate content (NCO%), which can be measured, for example, by the method described in "Polyurethane," Maki Shoten (1960), p. 21. The reaction temperature on adding the blocking agent is normally 50 to 150°C, and preferably 60 to 120°C. The reaction time is normally about 1 to about 7 hours. To the reaction system, the above-mentioned publicly known catalyst for urethane polymerization may be added to promote the reaction, and a plasticizer described later may also be added in any desired amount.

The acrylic sol composition of the present invention preferably contains the acrylic polymer fine particles (a) and the blocked polyurethane (b) at an (a) to (b) ratio of 90/10 to 15/80, and still preferably 90/10 to 50/50 by mass. In case where the amount of the blocked polyurethane (b) is lower than the above range, the resultant coating film is sometimes less satisfactory in adhesion to substrates, cold resistance, or strength than in case where the amount is within above range. On the other hand, in case where the amount of the blocked polyurethane (b) is over the above range, the viscosity of acrylic sol composition may be higher than that in case where the amount is within the above range, which may affect workability in coating.

Next, detailed explanation of the polyamine (c) is given in the following.
The polyamine (c) used in the present invention includes, for example, aliphatic polyamines such as ethylenediamine, diethylenetriamine, triethylenetetramine, tetraethylenepentamine, polyoxypropylenediamine, polyoxypropylenetriamine, and 1,2-diaminopropane; alicyclic polyamines such as isophoronediamine, 1,3-diaminocyclohexane, menthenediamine, bis(4-amino-3-methyldicyclohexyl)methane, diaminodicyclohexylmethane, bis(aminomethyl)cyclohexane, N-aminoethylpiperazine, and 3,9-bis(3-aminopropyl)-2,4,8,10-tetraoxaspiro(5.5)undecane; mononuclear polyamines such as m-phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine, 3,5-diethyltolylene-2,6-diamine; aromatic polyamines such as biphenylenediamine, 4,4'-diaminodiphenylmethane, 2,5-naphthylenediamine, and 2,6-naphthylenediamine; modified polyamines derived from such polyamine by addition reaction using glycidyl ether or acrylonitrile or by amidation using a carboxylic acid or its derivative; and the like.

Among these polyamines, preferred ones are aliphatic polyamines, alicyclic polyamines, and modified polyamines obtained using polyglycidyl compounds, since use of such polyamine provides an acrylic sol composition with further excellent storage stability.

The polyglycidyl compound which can provide the above modified polyamines includes, for example, polyglycidyl ether derivatives of a mononuclear polyhydric phenol such as hydroquinone, resorcinol, pyrocatechol, and phloroglucinol; polyglycidyl ether derivatives of a polynuclear polyhydric phenol such as dihydroxynaphthalene, biphenol, methylenebisphenol (bisphenol F), methylenebis(o-cresol), ethylidenebisphenol, isopropylidenebisphenol (bisphenol A), isopropylidenebis(o-cresol), tetrabromobisphenol A, 1,3-bis(4-hydroxycumyl)benzene, 1,4-bis(4-hydroxycumyl)benzene, 1,1,3-tris(4-hydroxyphenyl)butane, 1,1,2,2-tetra(4-hydroxylphenyl)ethane, thiobisphenol, sulfobisphenol, oxybisphenol, phenol novolak, o-cresol novolak, ethylphenol novolak, butylphenol novolak, octylphenol novolak, resorcinol novolak, bisphenol A novolak, bisphenol F novolak, and terpenediphenol; polyglycidyl ether derivatives of an adduct of the above mononuclear or polynuclear polyhydric phenol with ethylene oxide and/or propylene oxide; polyglycidyl ether derivatives of hydrogenated product of the above mononuclear polyhydric phenol; polyglycidyl ether derivatives of a polyol such as ethylene glycol, propylene glycol, butylene glycol, hexanediol, polyglycol, thiodiglycol, glycerol, trimethylolpropane, pentaerythritol, sorbitol, bisphenol A-ethylene oxide adduct, and dicyclopentadienedimethanol; glycidyl esters of an aliphatic, aromatic, or alicyclic polybasic acid such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, and endo-methylenetetrahydrophthalic acid, and homopolymer or copolymer of glycidyl methacrylate; glycidylamino group-containing epoxy compounds such as N,N-diglycidylaniline and bis(4-(N-methyl-N-glycidylamino)phenyl)methane; epoxidized cycloolefins such as vinylcyclohexenediepoxide, dicyclopentadienediepoxide, 3,4-epoxycyclohexylmethyl 3,4-epoxycyclohexanecarboxylate, 3,4-epoxy-6-methylcyclohexylmethyl 6-methylcyclohexanecarboxylate, and bis(3,4-epoxy-6-methylcyclohexylmethyl) adipate; epoxidized conjugated diene polymers such as epoxidized polybutadiene and epoxidized styrene-butadiene copolymer; heterocyclic compounds such as triglycidyl isocyanurate. These polyglycidyl compounds may be internally cross-linked with a prepolymer having terminal isocyanate groups. Among these polyglycidyl compounds, a bisphenol A- or F-type epoxy resin is preferably used.

The method for producing the modified polyamine from a polyamine, such as an aliphatic polyamine or an alicyclic polyamine, and a polyglycidyl compound is not particularly limited. It can be easily produced by using 0.5 to 1.8 equivalents of the polyglycidyl compound per mole of the polyamine, using solvent if necessary, and conducting dehydration reaction at 100 to 200°C, followed by further dehydration reaction (and solvent removal) under vacuum.

The modified polyamine to be used may be a compound derived from the above polyamine using a phenol and an aldehyde. The phenol includes, for example, phenol, cresol, ethylphenol, n-propylphenol, isopropylphenol, butylphenol, tert-butylphenol, octylphenol, nonylphenol, dodecylphenol, cyclohexylphenol, chlorophenol, bromophenol, resorcinol, catechol, hydroquinone, bisphenol A, bisphenol S, bisphenol F, naphthol, and polymers thereof. The aldehyde includes formaldehyde and the like.

The method for producing the modified polyamine from the polyamine compound, a phenol, and an aldehyde is not particularly limited. It can be easily produced, for example, by using 0.1 to 1.2 mol of the phenol and 0.5 to 3 mol of the aldehyde per mole of the polyamine, using a solvent if necessary, and conducting dehydration reaction at 50 to 200 °C, followed by further dehydration reaction (and solvent removal) under vacuum.

In the acrylic sol composition of the present invention, it is preferable to blend the polyamine compound (c) in a ratio of 0.01 to 10 parts by mass, and more preferably 0.05 to 5 parts by mass, with respect to 100 parts by mass of the acrylic polymer fine particles (a).

Next, detailed explanation of the acidic phosphate ester (d) is given in the following. The acidic phosphate ester (d) used in the present invention is a phosphate ester having at least one P-OH group in the molecule. It includes, for example, an acid of phosphorous partially esterified with an alkyl, alkenyl, or substituted alkyl group, wherein the acid of phosphorus includes orthophosphoric acid, metaphosphoric acid, pyrophosphoric acid, and polyphosphoric acid. The alkyl group in said partial ester includes, for example, methyl, ethyl, propyl, butyl, hexyl, octyl, isooctyl, 2-ethylhexyl, decyl, dodecyl, tetradecyl, octadecyl, and others. The alkenyl group in said partial ester includes, for example, allyl, octenyl, decenyl, octadecenyl, and others. The substituted alkyl group in said partial ester includes, for example, alkyl groups having a hydroxyl group and/or an ether bond including hydroxyalkyl groups such as 2-hydroxyethyl, 2-hydroxypropyl, 2-hydroxybutyl, and 2-hydroxy-2-phenylethyl; alkoxy- or aryloxy-hydroxyalkyl groups such as 2-hydroxy-3-methoxypropyl, 2-hydroxy-3-butoxypropyl, 2-hydroxy-3-octoxypropyl, 2-hydroxy-3-octadecyloxypropyl, 2-hydroxy-3-phenoxypropyl, 2-hydroxy-3-toluoxypropyl, and 2-hydroxy-3-octylphenoxypropyl; alkoxy- or aryloxy-hydroxyalkoxyalkyl groups such as 2-(3-methoxy-2-hydroxypropoxy)ethyl, 2-(3-butoxy-2-hydroxypropoxy)ethyl, 2-(3-phenoxy-2-hydroxypropoxy)ethyl, 2-(3-toluoxy- 2-hydroxypropoxy)ethyl; and others. These alkyl groups, alkenyl groups, and substituted alkyl groups preferably have 1 to 30 carbon atoms, and more preferably 1 to 10 carbon atoms.

It is preferable to use the acidic phosphate ester (d) having P-OH equivalent of 500 or lower, more preferably 50 to 300, since the storage stability of acrylic sol composition is further improved.

In the acrylic sol composition of the present invention, the ratio of the acidic phosphate ester (d) to be blended is preferably 0.001 to 100 parts by mass, and more preferably 0.01 to 5 parts by mass, with respect to 100 parts of the acrylic polymer fine particles (a).

As the plasticizer (e) used in the present invention, plasticizers conventionally used for polyvinyl chloride-based plastisol may be used. Examples include phthalate-type plasticizers such as diisononyl phthalate, di(2-ethylhexyl) phthalate, diisodecyl phthalate, and butyl benzyl phthalate; aliphatic carboxylate-type plasticizers such as di(2-ethylhexyl) adipate, di-n-decyl adipate, di(2-ethylhexyl) azelate, dibutyl sebacate, and di(2-ethylhexyl) sebacate; phosphate-type plasticizers such as tributyl phosphate, tri(2-ethylhexyl) phosphate, and 2-ethylhexyl diphenyl phosphate; epoxy-type plasticizers such as epoxidized soybean oil; and trimellitate-type plasticizers, pyromellitate-type plasticizers, benzoate-type plasticizers, polyester plasticizers, sulfonate-type plasticizers. These plasticizers may be used alone or in combination of two or more. Particularly diisononyl phthalate is preferably used in terms of low cost and high availability. The ratio of the plasticizer (e) to be blended is preferably 50 to 500 parts by mass, and particularly preferably 80 to 300 parts by mass, with respect to 100 parts by mass of the acrylic polymer fine particles (a) in terms of strength of coating films and workability.

As the filler (f) composing the acrylic sol composition of the present invention, a filler normally used for plastisol may be used. Examples of such filler include calcium carbonate, mica, talc, kaolin clay, silica, barium sulfate, and others. Fibrous fillers such as glass fiber, wollastonite, alumina fiber, ceramic fiber, and various whiskers may also be used.
Particularly, calcium carbonate is preferred because of its low cost. The ratio of the filler (f) to be blended is preferably 50 to 800 parts by mass, and particularly preferably 80 to 500 parts by mass with respect to 100 parts by mass of the acrylic polymer fine particles (a) in terms of film strength and low cost.

Preferably, the acrylic sol composition of the present invention further contains one kind of compound (g) selected from phenols and carboxylic acids for further improving storage stability of the acrylic sol composition.

The phenol includes, for example, phenol, cresol, ethylphenol, n-propylphenol, isopropylphenol, butylphenol, tert-butylphenol, octylphenol, nonylphenol, dodecylphenol, cyclohexylphenol, chlorophenol, bromophenol, resorcinol, catechol, hydroquinone, bisphenol A, bisphenol S, bisphenol F, naphthol, salicylic acid, and polymers thereof (phenolic resin).

The phenolic resin includes a phenolic resin produced by conventional method using a phenol like the above with formaldehyde as an aldehyde, and a polymer of a phenol obtained by condensation of a phenol listed above with an unsaturated cyclic hydrocarbon such as dicyclopentadiene and terpene.

As the above carboxylic acid, there are preferably used polycarboxylic acids including, for example, adipic acid, glutaric acid, pimelic acid, suberic acid, sebacic acid, maleic acid, itaconic acid, phthalic acid, isophthalic acid, terephthalic acid, trimellitic acid, pyomellitic acid, and others.

In the acrylic sol composition of the present invention, at least one kind of compound (g) selected from phenols and carboxylic acids is blended in a ratio of preferably 0.01 to 10 parts by mass, and particularly preferably 0.01 to 5 parts by mass, with respect to 100 parts by mass of the acrylic polymer fine particles (a).

In the acrylic sol composition of the present invention, publicly known conventional additives other than components (a) to (g) may be blended. As such additives, there may be used, for example, a pigment, an antioxidant, a foaming agent, a diluent, or a ultra-violet absorber. As the pigment, there may be used, for example, inorganic pigments such as titanium dioxide and carbon black or organic pigments such as azo pigments and phthalocyanine pigments. As the antioxidant, there may be used, for example, phenol antioxidants, phosphorus-containing antioxidants, sulfur-containing antioxidants, amine antioxidants, or others. As the foaming agent, there may be used a foaming agent that generates gas on heating., which includes, specifically, azo forming agents such as azodicarboxamide and azobisformamide. As the diluent, there may be used, for example, a solvent such as xylene and mineral terpine. As the ultra-violet absorber, there may be used, for example, a benzotriazole, benzophenone, or triazine absorber and others. The amount of these additives to be blended may be appropriately determined depending on the kind of additive, preferably 100 parts by mass or less with respect to 100 parts by mass of the component (a).

The method for preparing the acrylic sol composition of the present invention is not particularly limited, and a conventional method for producing plastisol may be used. For example, the acrylic sol composition of the present invention may be prepared by well blending the acrylic polymer fine particles (a), the blocked polyurethane (b), the polyamine (c), the acidic phosphate ester (d), the plasticizer (e), the filler (f), the compound (g) that is a phenol and/or a carboxylic acid, and other additives, using a publicly known mixer. Mixers such as a planetary mixer, a kneader, a grain mill, and a roll may be used for mixing

The acrylic sol composition of the present invention can be applied by a conventional known method, namely, applying with brush, roller coating, air spray coating, airless spray coating, or others. A coating film can be formed by applying the acrylic sol composition of the present invention, followed by heating. Conventional heating method may be employed; for example, a hot air circulating drying furnace may be used for heating.

The acrylic sol composition of the present invention can be applied for paint, ink, adhesive, glue, sealing material, and others, and it can also be used in molded products such as sundries, toys, industrial parts, and electric parts. For example, application to paper, cloth, or the like provides artificial leather, carpet, wall paper, clothing, waterproof sheet, and others; while application to a metal plate provides anti-corrosive metal plate.

### Example

In the following, the acrylic sol composition of the present invention is explained in further detail with reference to Examples.

### [Production Example-1] Production of blocked polyurethane 1

Dehydration reaction was conducted with 785 g of glycerol tris(polypropylene glycol) (molecular weight: 4,000) at 100 to 110°C under reduced pressure of 30 mmHg for 1 hour. After the reaction system was cooled to 60°C, there was added 103 g of tolylene diisocyanate, and reaction was conducted at 90 to 100°C under nitrogen atmosphere for 4 hours. The reaction mixture was cooled to 60°C, fed with 112 g of dicyclohexylamine dropwise, aged at 90 to 100°C for 1 hour, and evacuated at 100 to 110°C under 30 mmHg for 1 hour. In the IR spectrum, complete disappearance of the absorption due to NCO group at 2660 cm⁻¹ was confirmed; blocked polyurethane (BU-1) was thus obtained.

### [Production Example-2] Production of blocked polyurethane 2

Blocked polyurethane (BU-2) was produced in the same manner as Production Example-1 except that 112 g of dicyclohexylamine was replaced by 55 g of methyl ketoxime.

### [Production Example-3] Production of blocked polyurethane 3

Blocked polyurethane (BU-3) was produced in the same manner as Production Example-1 except that 1 g of ethyl phosphates (molar ratio of mono/di = 1/1, P-OH equivalent: 93) was added before adding tolylene diisocyanate.

### [Production Example-4] Production of blocked polyurethane 4

Dehydration reaction was conducted with 408 g of diisononyl phthalate and 481 g of glycerol tris(polypropylene glycol) (molecular weight: 4000) for 1 hour at 100 to 110°C under reduced pressure of 30 mmHg. After the reaction mixture was cooled to 80°C, there were added 97 g of dicyclohexylmethane-4,4'-diisocyanate (hydrogenated MDI) and 0.025 g of dibutyltin dilaurate, and reaction was conducted at 90 to 100°C under nitrogen atmosphere for 4 hours. The mixture was cooled to 60°C, supplied with 34 g of methyl ethyl ketoxime dropwise, and aged at 90 to 100°C for 1 hour.
In the IR spectrum, complete disappearance of the absorption due to NCO group at 2660 cm⁻¹ was confirmed; blocked polyurethane (BU-4) was thus obtained.

### [Production Example-5] Production of modified polyamine 1

To 399 g of isophoronediamine was added 476 g of ADEKA resin EP-4100E (produced by Asahi Denka Co., Ltd; bisphenol A-type epoxy resin, epoxy equivalent: 190) in divided fractions while the mixture was heated up to 100°C, and the resultant mixture was aged at 100 to 150°C for 2 hours.
There was added 140 g of MP-800K (produced by Asahi Organic Chemical Industry Co., Ltd., phenolic resin) in divided fractions at 150 to 180°C, and the resultant mixture was aged for 1 hour, fed with 35 g of sebasic acid, and dehydrated at 170 to 180°C under reduced pressure of 30 to 50 mmHg for 1 hour. The product was pulverized to particles of 30 µm or smaller using a pulverizing mill to obtain modified polyamine (HPA-1).

### [Production Example-6] Production of modified polyamine 2

To a reactor charged with 225 g of 1,2-diaminopropane, 89 g of toluene, and 89 g of isopropanol, 571 g of ADEKA resin EP-4901E (produced by Asahi Denka Co., Ltd., bisphenol F type-epoxy resin) was added in divided fractions at 70 to 95°C. After the reaction mixture was aged at 95 to 100°C for 1 hour, the solvent was removed at 155 to 165°C under reduced pressure of 40 to 60 mmHg for 1 hour.
Then, 254 g of MP-800K was added there in divided fractions at 155 to 165°C, followed by dehydration for 1 hour at 155 to 165°C under reduced pressure of 40 to 60 mmHg. The product was pulverized to particles of 30 µm or smaller using a pulverizing mill to obtain modified polyamine (HPA-2).

### [Production Example-7] Production of modified polyamine 3

To a reactor charged with 225 g of 1,2-diaminopropane, 89 g of toluene, and 89 g of isopropanol, 571 g of ADEKA resin EP-4901E (produced by Asahi Denka Co., Ltd.; bisphenol F-type epoxy resin) was added in divided fractions at 70 to 95°C. After the mixture was aged at 95 to 100°C for 1 hour, the solvent was removed at 155 to 165°C temperature under reduced pressure of 40 to 60 mmHg.
Then, 254 g of Mighty Ace G-150 (produced by Yasuhara Chemical Co., Ltd., terpene-phenol copolymer) was added there in divided fractions at 155 to 165°C, followed by dehydration reaction for 1 hour at 155 to 165°C under reduced pressure of 40 to 60 mmHg. The product was pulverized to particles of 30 µm or smaller by a pulverizing mill to obtain modified polyamine (HPA-3).

### [Production Example-8] Production of modified polyamine 4

To a reactor charged with 300 g of phenylxylylethane and 360 g of 1,3-diaminocyclohexane, 360 g of ADEKA resin EP-4100E (produced by Asahi Denka Co., Ltd; bisphenol A-type epoxy resin, epoxy equivalent: 190) was added in divided fractions while the mixture was heated to 100°C. The resultant mixture was aged at 100 to 150°C for 2 hours to obtain modified polyamine (HPA-4).

### [Examples 1 to 6 and Comparative Examples 1 to 2]

Fine particles of acrylic polymer were combined with the blocked polyurethane and others obtained in Production Examples above in the ratio shown in Table 1, and the combined materials were mixed and dispersed using a kneader to prepare each of acrylic sol compositions as Examples 1 to 6 and Comparative Examples 1 to 2.

### (Methods and results of evaluation)

For each of the acrylic sol compositions in Examples 1 to 6 and Comparative Examples 1 to 2, the viscosity stability, adhesion, and strength of coating film were evaluated by the following methods. The results are shown in Table 1.

### (1) Viscosity stability

Initial viscosity of each acrylic sol composition was measured at 25°C using a B-type rotating viscometer. The acrylic sol composition was kept in a sealed container at 40°C. After storage for 4, 7, and 10 days, the composition was cooled to 25°C, and the viscosity at 25°C was measured in the same manner to determine the percentage change of viscosity relative to the initial value.

### (2) Adhesion

Each acrylic sol composition was applied to an end of electrocoated steel plate sized 100 x 25 x 1.0 mm. A spacer sandwiched between plates so that the thickness of adhesive portion (coating film) was adjusted to 3 mm, and the plates were bonded by compression. After the specimen in such state was baked at 130°C for 20 minutes, the spacer was removed. The specimen was pulled in shearing direction at a speed of 50 mm/min, and the rupture of the coating film was observed to evaluate adhesion in the following ratings:
Good: Cohesion rupture
Poor: Interface rupture

### (3) Strength of coating film

Each acrylic sol composition was applied in 2 mm thick to a releasable plate and baked at 130°C for 20 minutes to form a sheet. The sheet was punched with a No. 2 dumbbell-shape mold. The dumbbell-shape specimen was subjected to tensile test with a speed of 50 mm/min at 23°C, 0°C, and -20°C to determine tensile strength (MPa) and elongation at fracture (%) at each temperature. The tear strength (MPa) of the sheet was also measured.

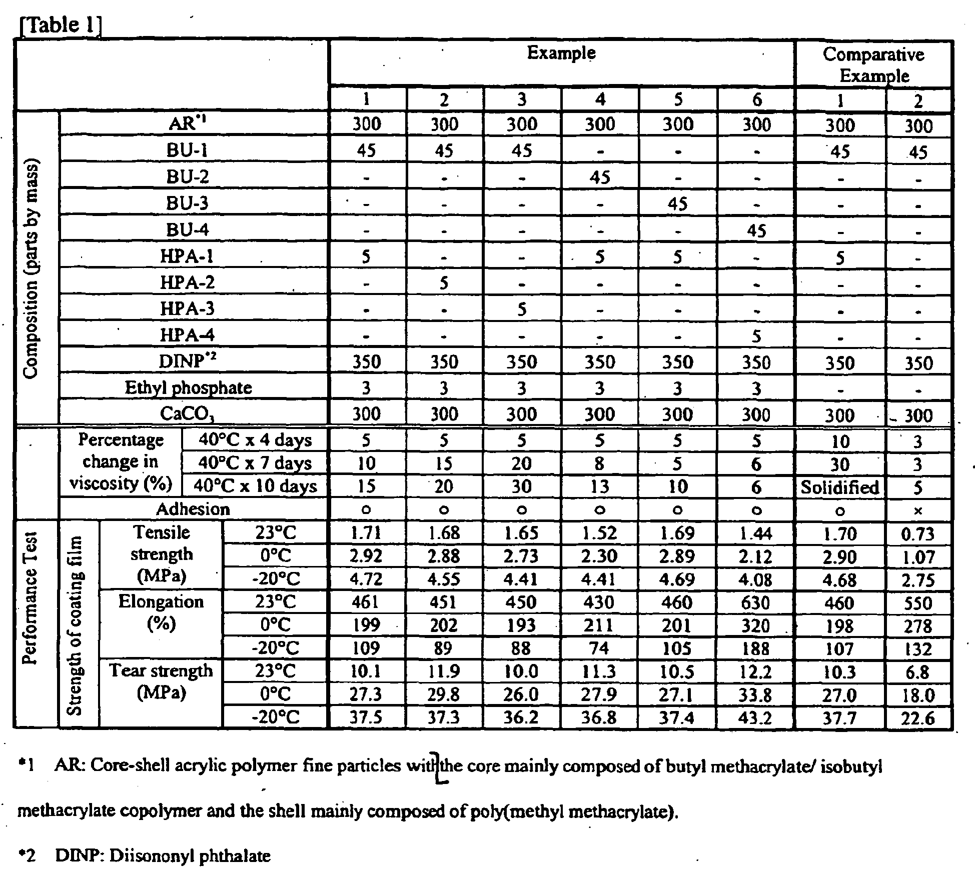

As clearly shown in Table 1, with an acrylic sol composition composed of acrylic polymer fine particles, a blocked polyurethane, a plasticizer, and a filler, the coating film formed has insufficient adhesion and quite poor strength (Comparative Example 2). An acrylic sol composition containing a polyamine in addition to the above components is inferior in viscosity stability, although the strength of coating film thereof is improved (Comparative Example 1).

On the contrary, with the acrylic sol composition of the present invention composed of acrylic polymer fine particles, a blocked polyurethane, a polyamine, an acidic phosphate ester, a plasticizer, and a filler, the viscosity stability is superior, and the coating film formed is excellent in adhesion and strength (Examples 1 to 6).

### Industrial Applicability

The acrylic sol composition of the present invention does not generate hydrogen chloride gas or dioxin when combusted, has excellent storage stability, can be cured at relatively low temperatures, and provides a coating film excellent in adhesion to substrates, cold resistance, and strength. The composition is, therefore, useful in a wide range of applications such as sealing materials, coating materials, and commodities.

## Claims

1. An acrylic sol composition comprising acrylic polymer fine particles (a), blocked polyurethane (b), polyamine (c), acidic phosphate ester (d), a plasticizer (e), and a filler (f).

2. The acrylic sol composition according to claim 1, wherein the ratio of the acrylic polymer fine particles (a) to the blocked polyurethane (b) is 90/10 to 15/85 by mass.

3. The acrylic sol composition according to claim 1 or 2, wherein the acrylic polymer fine particles (a) have core-shell structure comprising a core and a shell.

4. The acrylic sol composition according to any of claims 1 to 3, wherein the blocked polyurethane (b) is obtained from polyetherpolyol and diisocyanate.

5. The acrylic sol composition according to claim 4, wherein the polyetherpolyol has three or more functional groups.

6. The acrylic sol composition according to claim 5, wherein the polyetherpolyol having three or more hydroxyl groups is glycerol tris(polypropylene glycol).

7. The acrylic sol composition according to any of claims 1 to 6, wherein the blocked polyurethane (b) is obtained by using dicyclohexylamine or methyl ketoxime as a blocking agent.

8. The acrylic sol composition according to any of claims 1 to 7, wherein the polyamine (c) is modified polyamine obtained from aliphatic or alicyclic polyamine and polyglycidyl compound.

9. The acrylic sol composition according to claim 8, wherein the aliphatic or alicyclic polyamine is at least one compound selected from isophoronediamine, 1,3-diaminocyclohexane, and 1,2-diaminopropane.

10. The acrylic sol composition according to claim 8 or 9, wherein the polyglycidyl compound is an epoxy resin of bisphenol A- or F-type.

11. The acrylic sol composition according to any of claims 1 to 10, wherein the acidic phosphate ester (d) is at least one compound selected from acidic alkyl phosphates.

12. The acrylic sol composition according to any of claims 1 to 11, wherein the plasticizer (e) is at least one compound selected from phthalate plasticizers.

13. The acryl sol composition according to any of claims 1 to 12, further comprising at least one compound (g) selected from phenols and carboxylic acids.

## Patentansprüche

1. Acryl-Sol-Zusammensetzung, die feine Acrylpolymerpartikel (a), geblocktes Polyurethan (b), ein Polyamin (c), einen sauren Phosphatester (d), einen Weichmacher (e) und ein Füllmittel (f) aufweist.

2. Acryl-Sol-Zusammensetzung nach Anspruch 1, wobei das Verhältnis der feinen Acrylpolymerpartikel (a) zu dem geblockten Polyurethan (b) von 90/10 bis 15/85, bezogen auf die Masse, beträgt.

3. Acryl-Sol-Zusammensetzung nach den Ansprüchen 1 oder 2, wobei die feinen Acrylpolymerpartikel (a) eine Kern-Schalenstruktur aufweisen, die einen Kern und eine Schale umfasst.

4. Acryl-Sol-Zusammensetzung nach einem der Ansprüche 1 bis 3, wobei das geblockte Polyurethan (b) aus Polyetherpolyol und Diisocyanat erhalten wird.

5. Acryl-Sol-Zusammensetzung nach Anspruch 4, wobei das Polyetherpolyol drei oder mehr funktionelle Gruppen trägt.

6. Acryl-Sol-Zusammensetzung nach Anspruch 5, wobei das Polyetherpolyol mit drei oder mehr Hydroxygruppen Glycerol-Tris(polypropylenglycol) ist.

7. Acryl-Sol-Zusammensetzung nach einem der Ansprüche 1 bis 6, wobei das geblockte Polyurethan (b) durch Verwendung von Dicyclohexylamin oder Methylketoxim als Blockmittel erhalten wird.

8. Acryl-Sol-Zusammensetzung nach einem der Ansprüche 1 bis 7, wobei das Polyamin (c) modifiziertes Polyamin ist, das aus aliphatischem oder alizyklischem Polyamin und einer Polyglycidylverbindung erhalten wird.

9. Acryl-Sol-Zusammensetzung nach einem der Ansprüche 8, wobei das aliphatische oder alizyklische Polyamin zumindest eine Verbindung ist, die unter Isophorondiamin, 1,3-Diaminocyclohexan, und 1,2-Diaminopropan ausgewählt ist.

10. Acryl-Sol-Zusammensetzung nach den Ansprüchen 8 oder 9, wobei die Polyglycidylverbindung ein Epoxidharz des Bisphenol A- oder F-Typs ist.

11. Acryl-Sol-Zusammensetzung nach einem der Ansprüche 1 bis 10, wobei der saure Phosphatester (d) zumindest eine Verbindung ist, die unter sauren Alkylphosphaten ausgewählt ist.

12. Acryl-Sol-Zusammensetzung nach einem der Ansprüche 1 bis 11, wobei der Weichmacher (e) zumindest eine Verbindung ist, die unter Phthalat-Weichmachern ausgewählt ist.

13. Acryl-Sol-Zusammensetzung nach einem der Ansprüche 1 bis 12, die ferner zumindest eine Verbindung (g) aufweist, die unter Phenolen und Cabonsäuren ausgewählt ist.

## Revendications

1. Composition de sol acrylique comprenant des particules fines de polymère acrylique (a), un polyuréthane bloqué (b), une polyamine (c), un ester de phosphate acide (d), un plastifiant (e) et une charge (f).

2. Composition de sol acrylique selon la revendication 1, dans laquelle le rapport entre les particules fines de polymère acrylique (a) et le polyuréthane bloqué (b) est de 90/10 à 15/85 en poids.

3. Composition de sol acrylique selon la revendication 1 ou 2, dans laquelle les particules fines de polymère acrylique (a) possèdent une structure en coeur-coquille comprenant un coeur et une coquille.

4. Composition de sol acrylique selon l'une quelconque des revendications 1 à 3, dans laquelle le polyuréthane bloqué (b) est obtenu à partir de polyétherpolyol et de diisocyanate.

5. Composition de sol acrylique selon la revendication 4, dans laquelle le polyétherpolyol possède trois ou plus de trois groupes fonctionnels.

6. Composition de sol acrylique selon la revendication 5, dans laquelle le polyétherpolyol possédant trois ou plus de trois groupes hydroxyles est le glycérol tris(polypropylène glycol).

7. Composition de sol acrylique selon l'une quelconque des revendications 1 à 6, dans laquelle le polyuréthane bloqué (b) est obtenu en utilisant la dicyclohexylamine ou la méthylcétoxime comme agent de blocage.

8. Composition de sol acrylique selon l'une quelconque des revendications 1 à 7, dans laquelle la polyamine (c) est une polyamine modifiée obtenue à partir d'une polyamine aliphatique ou alicyclique et d'un composé de polyglycidyle.

9. Composition de sol acrylique selon la revendication 8, dans laquelle la polyamine aliphatique ou alicyclique est au moins un composé choisi parmi l'isophoronediamine, le 1,3-diaminocyclohexane, et le 1,2-diaminopropane.

10. Composition de sol acrylique selon la revendication 8 ou 9, dans laquelle le composé de polyglycidyle est une résine époxy de bisphénol de type A ou F.

11. Composition de sol acrylique selon l'une quelconque des revendications 1 à 10, dans laquelle l'ester de phosphate acide (d) est au moins un composé choisi parmi des phosphates d'alkyles acides.

12. Composition de sol acrylique selon l'une quelconque des revendications 1 à 11, dans laquelle le plastifiant (e) est au moins un composé choisi parmi des plastifiants à base de phthalate.

13. Composition de sol acrylique selon l'une quelconque des revendications 1 à 12, comprenant en outre au moins un composé (g) choisi parmi les phénols et les acides carboxyliques.
